Europäisches Patentamt

European Patent Office

Office européen des brevets

(11) Publication number: **0 396 198**
**A1**

# (12) EUROPEAN PATENT APPLICATION

(21) Application number: **90201089.1**

(22) Date of filing: **01.05.90**

(51) Int. Cl.5: **B29C 43/36, B29C 67/14,**
**B30B 15/06**

(30) Priority: **02.05.89 NL 8901119**

(43) Date of publication of application:
**07.11.90 Bulletin 90/45**

(84) Designated Contracting States:
**AT BE CH DE DK ES FR GB IT LI LU NL**

(71) Applicant: **Kunststofverwerkende Industrie**
**Katan B.V.**
**Weerdskampweg 15 P.O. Box 2042**
**NL-5202 CA 's-Hertogenbosch(NL)**

(72) Inventor: **Kipperman, Antoon Herman Maria**
**Rooseveltlaan 24**
**5242 AA Rosmalen(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) **Process for the manufacture of a fibre-reinforced or chip-reinforced thermoplastic sheet, and press used for carrying out said process.**

(57) For the manufacture of a fibre-reinforced or chip-reinforced thermoplastic sheet a stack comprising fibre or chip layers and plastic layers is placed in a press, and said stack is placed under pressure in the press and heated. In order to be able to manufacture sheets of any desired length in a semi-continuously operating, relatively small press, restrict heat losses to a minimum and keep the surface of the manufactured sheets substantially free from scoring or an imprint pattern from the press, the stack of any desired length is fed in stages through the periodically opening and closed press, while in an entry zone to said press the temperature and pressure are increased gradually in the feed direction towards the press by means of extension parts of the press. The press for carrying out this method comprises a top press (2) with heating means (4), a bottom press (3) with heating means (4), and means for pressing the top and bottom press towards each other, while according to the invention the top and bottom press are provided with extension parts (5) and (6) respectively, which extension parts are made of elastic, heat-conducting sheet material which is connected in a heat-conducting manner to the press.

# Process for the manufacture of a fibre-reinforced or chip-reinforced thermoplastic sheet, and press used for carrying out said process.

In the first instance the invention relates to a process for the manufacture of a fibre-reinforced or chip-reinforced thermoplastic sheet, comprising the placing in a press of a stack made up of fibre or chip layers and plastic layers and placing under pressure and heating of the stack in the press.

In known methods for the manufacture of a fibre-reinforced or chip-reinforced thermoplastic sheet the stack of layers is placed in its entirety in a discontinuously operating press, and the press is then closed for a specific time and the end product is formed under raised pressure and temperature. A large reinforced plastic sheet requires a large press. It will be clear that there are practical limits on the size of a press and consequently on the size of the sheets to be manufactured. On the other hand, there is a growing need in the industry for fibre-reinforced plastic sheets of large dimensions. An example of an application is the floor panel of a motor car. If sheets of, for example, 3 to 4.5 metres in length are manufactured in a known discontinuously operating press, great heat losses occur when the finished sheet is being replaced by a new stack of layers.

The object of the invention is to produce a process of the type mentioned in the preamble, by means of which sheets of any desired length can be manufactured in a semi-continuously operating, relatively small press. The heat losses will have to be small, and the surface of the manufactured sheets will have to be substantially free from scoring or an imprint pattern from the press.

According to the invention, the process is to this end characterized in that the stack of any desired length is fed in stages through the periodically opened and closed press, while in an entry zone to said press the temperature and pressure are increased gradually in the feed direction towards the press by means of extension parts of the press.

The temperature and pressure are preferably reduced gradually in a delivery zone of the press by means of extension parts of the press in the delivery direction from the press.

In order to prevent the manufactured sheet from adhering to the bottom and top press, the stack can be provided on both sides with a detaching sheet which has anti-stick properties. Another possibility is that the top press, the bottom press and the above-mentioned extension parts are provided with a detaching sheet having anti-stick properties.

In general, the fibre-reinforced or chip-reinforced thermoplastic sheet will be cooled outside the press.

The invention also relates to a press for carrying out the process according to the invention. Said press comprises a top press with heating means, a bottom press with heating means, and means for pressing the top and bottom press towards each other. According to the invention, the top press and the bottom press are provided with extension parts in the entry zone to the press, which extension parts are made of elastic, heat-conducting sheet material, in particular sheet steel, which is connected in a heat-conducting manner to the press.

The top press and the bottom press can also be provided in the delivery zone with extension parts in the form of elastic, heat-conducting sheet material in particular steel plate, which is connected in a heat-conducting manner to the press.

The manufactured sheet will exhibit a rapid shrinkage in the delivery zone. In order still to keep the sheet under pressure in that period, the sheet-type extension parts in the delivery zone are provided near their ends with parts which are bent towards each other.

The invention will now be explained in greater detail with reference to the figures.

Fig. 1 shows a cross-section of an opened press during the manufacture of a fibre-reinforced thermoplastic sheet.

Fig. 2 shows said press, but now in the closed position.

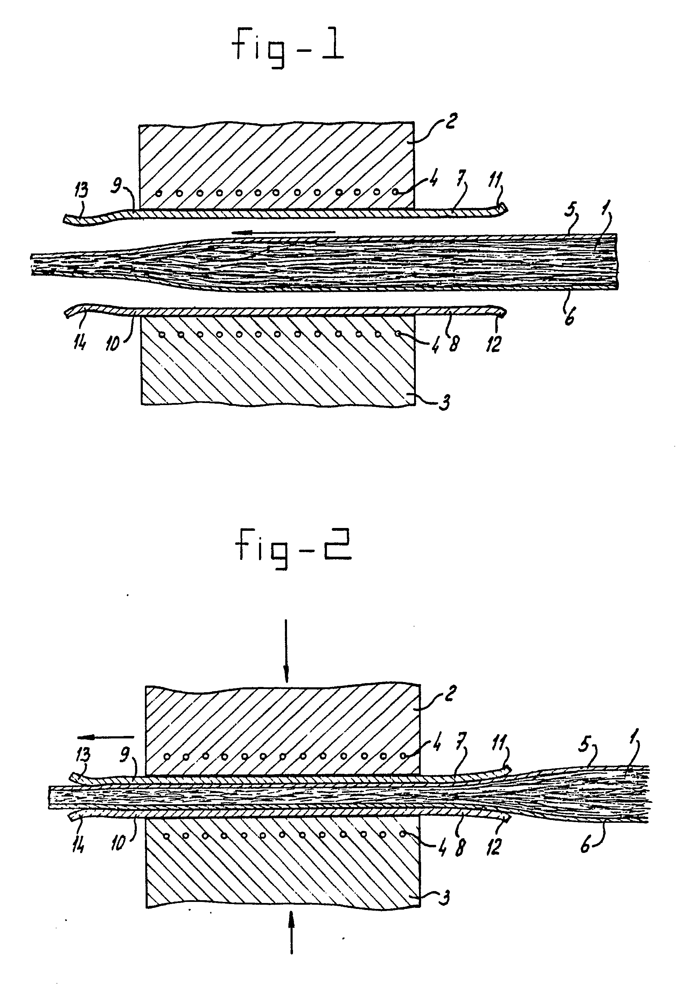

Fig. 1 shows that a stack 1 of alternate layers of reinforcing fibre and layers of thermoplastic material is conveyed into an open press. The stack 1 is of any desired length. The press comprises a top press 2 and a bottom press 3, each provided with electric heating elements 4. A detaching sheet 5, 6 having anti-stick properties is provided on either side of the stack. This layer is made, for example, of teflon or aluminium foil.

Viewed in the forward movement direction of the stack, indicated by an arrow, the top and bottom press are of a relatively low length measurement. Extension parts 7, 8, in the form of sheets of elastic, heat-conducting material (for example, steel 37), are fixed to top and bottom press in the entry zone.

In the delivery zone of the press the top and bottom presses are also provided with extension parts 9, 10 in the form of sheets of heat-conducting elastic material (for example, steel 37).

By way of example, the bottom and top press are 50 cm long (viewed in the direction of movement of the stack 1), and the extension parts 5 to 10 project 10 cm relative to the press.

If a part of the stack is located between the top and bottom press with the extension parts thereof, the press is closed. The time during which the press remains closed is, for example, between 20 and 30 seconds. The heating elements 4 are energized, so that the top and bottom press are at the required temperature. The plastic material softens and under the pressure of the press a fibre-reinforced thermoplastic sheet is produced. For example, the starting stack comprises ten layers of glass, plastic, carbon or aramid fibres or chips and eleven layers of thermoplastic material, and the stack is 10 mm thick. The manufactured sheet in that case is about 3.5 mm thick.

Through their elasticity, the extension parts 7 and 8 can follow the transition from the relatively great thickness of the initial stack to the relatively small thickness of the sheet between the top and bottom press (in the example, for example 3.6 mm), in other words, they deflect laterally and converge towards each other. The temperature of the extension parts 7 and 8 decreases gradually from the temperature of the press towards the outside ends. In consequence, both the pressure on the stack and the temperature of the stack increase gradually in the direction of the bottom and top press 2, 3. The ends 11, 12 of the extension parts 7, 8 are bent outwards slightly in order to prevent the extension parts from cutting into the sheet to be produced.

What is achieved is that a fibre-reinforced thermoplastic sheet is produced without the external surface of said sheet being defaced by scoring or an imprint pattern from the press.

In the delivery zone the elastic extension parts 9 and 10 press on the compressed product, while the temperature decreases gradually towards the outside ends. These extension parts have inward-bent parts 13, 14 which follow the shrinkage of the material and the swelling by the fibres (in the example approximately 1 mm).

After opening of the press the assembly of the stack and the sheet produced is slid along a part of the length of the press, so that a fresh piece of the stack goes between the bottom and top press. Closing of the heated press leads to a new piece of fibre-reinforced plastic sheet.

The cycle can in principle be repeated infinitely, so that no limits need be set for the length of the sheet obtained.

bat is important is that the press can be relatively small and requires a relatively low investment. A high pressure can be concentrated on a small surface. The press always remains at temperature. The further cooling of the sheet obtained takes place outside the press. The heat losses are reduced to a minimum, and a great heat capacity can be transferred to the stack.

The detaching sheets 5, 6 with anti-stick properties ensure that the plastic sheet does not stick to the bottom and top press. It is not, however, out of the question that instead of the stack 1 the top and bottom press 2, including the extension parts 7, 10, are provided with anti-stick layers.

If the detaching layers 5, 6 are added to the stack 1, they are stripped off after cooling of the heated plastic sheet.

The invention is not limited to the manufacture of flat fibre-reinforced or chip-reinforced plastic sheet: sectional sheets, for example corrugated sheets, are also possible. In that case the top and bottom press 2, 3 are, of course, provided with a suitable profile. All kinds of designs of presses are possible, so long as they can operate semi-continuously.

Of course, starting stacks of a much greater thickness than 10 mm can also be handled, in which case the temperature and compression pressure, the geometry of the pressed sheets and the external cooling can be set separately.

## Claims

1. Process for the manufacture of a fibre-reinforced or chip-reinforced thermoplastic sheet, comprising the placing in a press of a stack made up of fibre or chip layers and plastic layers in a press and placing under pressure and heating of the stack in the press, characterized in that the stack of any desired length is fed in stages through the periodically opened and closed press, while in an entry zone to the press the temperature and pressure are increased gradually in the feed direction towards the press by means of extension parts of the press.

2. Process according to Claim 1, characterized in that the temperature and pressure are reduced gradually in a delivery zone from the press by means of extension parts of the press in the delivery direction from the press.

3. Process according to Claim 1 or 2, characterized in that the stack is provided on both sides with a detaching sheet which has anti-stick properties.

4. Process according to Claim 1 or 2, characterized in that the top press, the bottom press and said extension parts are provided with a detaching sheet which has anti-stick properties.

5. Process according to any of the preceding claims, characterized in that the formed fibre-reinforced or chip-reinforced thermoplastic sheet is cooled outside the press.

6. Press for carrying out the process according to Claim 1, comprising a top press (2) with heating means (4), a bottom press (3) with heating means (4), and means for pressing the top and bottom press towards each other, characterized in that the top and bottom press are provided with extension parts (5) and (6) respectively, which extension parts are made of elastic, heat-conducting sheet material in particular steel plate, which is connected in a heat-conducting manner to the press.

7. Press according to Claim 6, characterized in that the top and bottom press are provided with extension parts (9, 10) in the delivery zone, which extension parts are made of elastic heat-conducting sheet material, in particular steel.

8. Press according to Claim 7, characterized in that the sheet-type extension parts (9, 10) in the delivery zone of the press near their ends are provided with parts (13, 14) which are bent towards each other for holding under pressure the formed fibre-reinforced or chip-reinforced thermoplastic sheet during shrinkage thereof.

Fig-1

Fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A- 863 975 (VAN HÜLLEN) * Page 2, lines 46-90; figure 2 * | 6-8 | B 29 C 43/36 |
| A | | 1-5 | B 29 C 67/14 |
| | --- | | B 30 B 15/06 |
| X | GB-A-1 151 500 (FAHRNI) * Page 2, lines 95-114; figure 1 * | 6-8 | |
| A | | 1-5 | |
| | --- | | |
| X | US-A-2 509 354 (JONES et al.) * Column 3, lines 62-68; figure 3 * | 6-8 | |
| A | | 1-5 | |
| | --- | | |
| A | WO-A-8 700 791 (SMITH) * Page 1, lines 3-5; page 2, lines 15-19; figure 1A * | 1-8 | |
| | --- | | |
| A | PATENT ABSTRACTS OF JAPAN, vol. 6, no. 23 (M-111)[901], 10th February 1982; & JP-A-56 142 036 (NIPPON ITA GLASS) 06-11-1981 | 1-8 | |

TECHNICAL FIELDS SEARCHED (Int. Cl.5)

B 29 C
B 30 B
B 27 N

The present search report has been drawn up for all claims

| Place of search | Date of completion of the search | Examiner |
|---|---|---|
| THE HAGUE | 06-08-1990 | ATTALLA G. |